# EUROPÄISCHE PATENTSCHRIFT

(11) **EP 2 185 844 B1**
(45) Veröffentlichungstag und Bekanntmachung des Hinweises auf die Patenterteilung: **20.11.2019**
(21) Anmeldenummer: 08801504.5
(22) Anmeldetag: 01.08.2008
(51) Int. Cl.: F16K 15/06, F16K 27/02, F16L 29/02, F16L 13/14, F16K 15/02

(54) **VENTILBAUTEIL**
VALVE COMPONENT
ÉLÉMENT CLAPET

(30) Priorität: 01.08.2007 DE 202007010788 U
(43) Veröffentlichungstag der Anmeldung: 19.05.2010
(73) Patentinhaber: Weh, Erwin, 89257 Illertissen (DE); Weh, Wolfgang, 89257 Illertissen (DE)
(72) Erfinder: Weh, Erwin, 89257 Illertissen (DE); Weh, Wolfgang, 89257 Illertissen (DE)
(74) Vertreter: Fiener, Josef
(86) Internationale Anmeldenummer: PCT/EP2008/006359
(87) Internationale Veröffentlichungsnummer: WO 2009/015900

(56) Entgegenhaltungen:
- EP-A- 1 271 039
- WO-A1-98/15759
- DE-U1- 29 711 841
- US-A- 4 470 575
- US-A- 5 113 900
- US-A1- 2002 036 015
- US-A1- 2007 052 232

## Beschreibung

Die Erfindung betrifft ein Ventilbauteil in Form eines Rückschlagventils oder eines Anschlussnippels, insbesondere für die Betankung von Erdgasfahrzeugen, mit den oberbegrifflichen Merkmalen des Anspruchs 1.

Ein derartiger Anschlussnippel ist aus der WO 00/52378 der Anmelder bekannt. Hierbei wird eine Steckkupplung beschrieben, die an den Anschlussnippel angeschlossen wird, wobei Spannzangen in das Anschlussnippels eingreifen.

Hierdurch wird ein formschlüssiger und druckdichter Anschluss erreicht, wie dies zur Druck-Betankung von Erdgas-Fahrzeugen mit relativ hohen Drücken erforderlich ist. Der Anschlussnippel ist hierbei recht hohen Belastungen ausgesetzt, so dass dieser sehr stabil ausgeführt werden muss, um den Normen für die Erdgasbetankung (NGV) zu genügen.

Derartige Anschlussnippel werden meist aus zwei hülsenförmigen Gehäuseteilen verschraubt, in denen ein Ventil mit entsprechender Dichtfläche eingesetzt ist. Diese Bauweise ist jedoch relativ teuer, da die Fertigung des Außen- und Innengewindes sehr aufwendig ist, zumal zur Abdichtung der Gehäuseteile zueinander und des eingesetzten Ventils mehrere O-Ringe erforderlich sind, die in entsprechende Nuten oder Einstiche eingelegt werden. Dadurch ist auch der Montageaufwand recht hoch.

Andere bekannte Lösungen sind in den Dokumenten US 4,470,575 A1, WO 98/15759 A1, DE 297 11 841 U1 und US 5,113,900 A1 offenbart.

Demzufolge liegt der Erfindung die Aufgabe zugrunde, ein Ventilbauteil zu schaffen, bei dem die Herstellung vereinfacht wird und somit kostengünstig durchführbar ist.

Diese Aufgabe wird gelöst durch ein Ventilbauteil gemäss den Merkmalen des Anspruches 1. Bevorzugte Ausführungsformen sind Gegenstand der Unteransprüche.

Durch die vorgeschlagene Verpressung der zwei Gehäuseteile des Ventilbauteils, insbesondere in Form eines Anschlussnippels ist es möglich, diese ohne aufwändige Gewinde sicher und druckdicht zu verbinden. Hierdurch wird eine erhebliche Kosteneinsparung möglich. Zudem werden durch die Verwendung einer einzigen Dichthülse anstatt mehrerer O-Ringe erhebliche Einsparungsmöglichkeiten geschaffen. Insbesondere ergibt sich durch die Verwendung einer Dichthülse an der Stoßstelle zwischen den Gehäuseteilen eine sichere Abdichtung nach außen hin, aber zugleich eine Dichtfläche für das eingebaute Ventil, also somit ein Doppelnutzen. Hierdurch wird auch die Montage wesentlich vereinfacht, so dass diese z.B. auch robotergestützt durchführen lässt.

In bevorzugter Ausführungsform ist die Dichthülse aus einem widerstandsfähigen Kunststoff, bevorzugt aus PEEK gebildet, da sich hierdurch die geforderte Langzeit-Dichtheit ergibt. Zudem kann neben der Abdichtung für ein Rückschlagventil auch ein Filtereinsatz im Anschlussnippel sicher gehalten werden, der sich insbesondere direkt an die Dichthülse anschließt. Dadurch ergibt sich ein besonders kompakter Aufbau des Anschlussnippels bzw. des Ventilbauteils.

Nachfolgend wird ein bevorzugtes Ausführungsbeispiel des Ventilbauteils, insbesondere in Form eines Anschlussnippels oder eines Rückschlagventils anhand der Zeichnungen beschrieben und erläutert. Hierbei zeigt:
Fig. 1 im Halbschnitt ein Ventilbauteil in Form eines Anschlussnippels, und
Fig. 2 ein ähnlich aufgebautes Rückschlagventil.

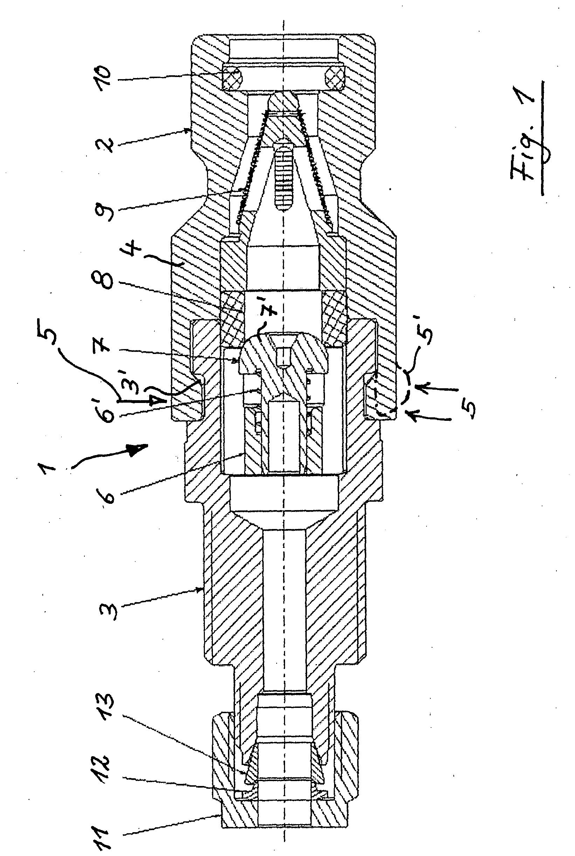

In Fig. 1 ist ein Ventilbauteil 1 in Form eines Anschlussnippels im Halbschnitt dargestellt. Der Anschlussnippel weist zum Aufstecken einer Steckkupplung ein Anschlussprofil 2 auf, an das zum druckdichten Anschluss eine Steckkupplung formschlüssig anschliessbar ist, wie dies z.B. in der EP 1 271 039 der Anmelder gezeigt ist. Das Ventilbauteil 1 besteht aus zwei Hauptteilen, nämlich zwei hülsenförmig ausgebildeten Gehäuseteilen 3 und 4, die mit einer Verpressung (wie mit dem Pfeil 5 angedeutet) sicher miteinander verbunden sind. Hierzu ist an einem der Gehäuseteile (hier am linken Teil 3) eine Ringnut 3' eingedreht, in die nach dem Überstecken des Gehäuseteils 4 eine dort angefräste oder gedrehte Wulst 5' (im unteren Bereich als Strichpunktlinie dargestellt) eingepresst wird. Die beiden Gehäuseteile 3 und 4 sind somit mit der Verpressung oder Bördelung 5 sicher und stabil verbunden.

Durch diese Verpressung 5 wird auch eine Dichthülse 8 im Inneren des Anschlussnippels sicher gehalten, die an der Stoßstelle der beiden Gehäuseteile 3 und 4 angeordnet ist, bevorzugt in eines der beiden eingepresst ist. Hierdurch wird eine sichere Abdichtung nach außen hin erzielt. Zudem dient die Dichthülse 8 als Anlage- oder Dichtfläche für ein eingebautes Ventil 7, nämlich hier eines Rückschlagventils. Das Rückschlagventil 7 besteht neben der als Dichtfläche dienenden Dichthülse 8 aus einem Dichtkegel 7', der in einem Teleskopelement 6 mit einer Schließfeder 6' gelagert ist. Bei Druckbeaufschlagung, insbesondere bei der Betankung, kann somit der Dichtkegel 7' durch die Verschiebebewegung gegen die Feder 6' im Teleskopelement 6 hier nach links ausweichen und somit den Fluiddurchlass zu einem hier nach links führenden Anschlussschlauch freigeben, der beispielsweise mit einer Überwurfmutter 11 und Dichtprofilen 12, 13 angeschlossen ist und zu einem Erdgastank führt.

In bevorzugter Ausführungsform ist benachbart zur Dichthülse 8 ein Filtereinsatz 9 angeformt, insbesondere in direkten Anschluss. Der Filtereinsatz 9 weist hierbei eine kegelige Außenform auf, so dass sich die Spitze des Filtereinsatzes 9 bis nahe zu einem Dichtring 10 erstreckt, der im Anschlussprofil 2 in eine Innennut eingesetzt ist. An diesen Dichtring 10 wird in Anschlussstellung ein (nicht dargestellter) Dichtkolben der Steckkupplung angesetzt, so dass sich ein druckdichter Anschluss ergibt. In dieser Anschlussstellung greifen Spannzangen (oder auch bei Hydraulikkupplungen übliche Kugeln) in das Anschlussprofil 2 ein. Der nähere Aufbau der Steckkupplung ist beispielsweise in der eingangs genannten WO 00/52378 der Anmelder beschrieben. Insgesamt wird somit ein besonders einfach aufgebauter, variabel einsetzbarer Anschlussnippel, insbesondere für die Betankung von Erdgasfahrzeugen geschaffen.

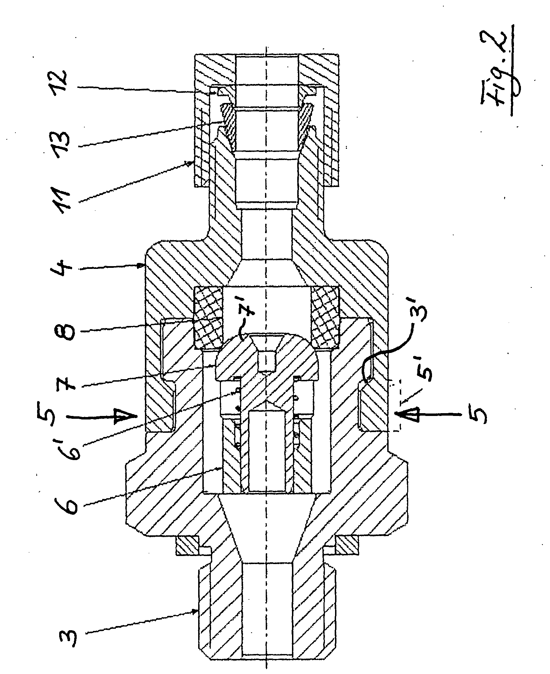

In Fig. 2 ist die Bauform eines Rückschlagventils gezeigt, wobei funktionsgleiche Bauteile mit den selben Bezugszeichen wie in Fig. 1 bezeichnet sind. Durch das Fehlen des länglichen Anschlussprofils 2 und des Filtereinsatzes 9 ist das Ventilbauteil 1 noch kompakter aufgebaut. Die Überwurfmutter 11 mit den Dichtprofilen 12, 13 zum Anschluss an eine Fluidleitung ist hier an der rechten Hälfte vorgesehen. Die Gehäuseteile 3 und 4, sowie die Verpressung 5 (durch Einpressen der Wulst 5' in die Ringnut 3', bevorzugt mittels einer Schlauchpresse) sind weitgehend gleich wie in Fig. 1 aufgebaut. Gleiches gilt für die Dichthülse 8, die bevorzugt aus einem widerstandsfähigen Polyetheretherketon (PEEK) besteht. Dieses Material bietet auch bei extremen Minustemperaturen eine hohe Dichtheit und Medienbeständigkeit, was bei den ansonsten üblichen O-Ringen zu Problemen führen kann. Für die Materialwahl der Gehäuseteile 3 und 4 ist es empfehlenswert, den Gehäuseteil mit der einzupressenden Wulst 5' aus duktilem, kaltverformbarem Werkstoff herzustellen, während für den Gehäuseteil (hier 3) mit der Ringnut 3' ein hochfester Stahl zu bevorzugen ist. Hierdurch kann die Verpressung 5 mit relativ geringem Kraftaufwand hergestellt werden.

## Patentansprüche

1. Ventilbauteil in Form eines Rückschlagventils oder eines Anschlussnippels, insbesondere für die Betankung von Erdgasfahrzeugen, zum druckdichten Anschluss an eine Fluidleitung oder eine Steckkupplung, wobei das Ventilbauteil (1) zwei Gehäuseteile (3, 4) aufweist, die druckdicht miteinander verbunden sind und in sich ein Ventil (7) aufnehmen, sowie innen an der Stoßstelle zwischen den Gehäuseteilen (3, 4) eine Dichthülse (8) angeordnet ist, die zugleich die Dichtfläche für das Ventil (7) bildet,
**dadurch gekennzeichnet, dass**
die Gehäuseteile (3, 4) an einer Ringnut (3') die an einem der beiden Gehäuseteile (3, 4) ausgebildet ist, miteinander verpresst sind und im unverpressten Zustand am anderen der beiden Gehäuseteile (3, 4) zur Verpressung (5) in die Ringnut (3') hinein eine überstehende Wulst (5') vorgesehen ist.

2. Ventilbauteil nach Anspruch 1, **dadurch gekennzeichnet, dass** die Dichthülse (8) in eines der Gehäuseteile (3, 4) eingepresst ist.

3. Ventilbauteil nach Anspruch 2, **dadurch gekennzeichnet, dass** sich in axialer Richtung an die Dichthülse (8) ein Filtereinsatz (9) anschließt, der zusammen mit der Dichthülse (8) in eine der Gehäusehälften (4) eingepresst ist.

4. Ventilbauteil nach Anspruch 3, **dadurch gekennzeichnet, dass** der Filtereinsatz (9) eine kegelige Außenform aufweist.

5. Ventilbauteil nach einem der Ansprüche 1 bis 4, **dadurch gekennzeichnet, dass** die Dichthülse (8) aus Polyetheretherketon (PEEK) besteht.

## Claims

1. Valve component in form of a non-return valve or a connecting nipple, in particular for the refuelling of natural gas vehicles, for pressure-tight connection to a fluid line or a quick-connect coupling, wherein the valve component (1) has two housing parts (3, 4) which are connected pressure-tightly to one another and accommodate a valve (7) therein, and wherein a seal bushing (8) is arranged inside at the joint between the housing parts (3, 4) and further forms the sealing surface for the valve (7),
**characterised in that**
the housing parts (3, 4) are pressed together at an annular groove (3'), which is arranged at one of the two housing parts (3, 4) and in the un-pressed condition, the other one of the two housing parts (3, 4) is provided with a projecting bead (5') for press-fitting (5) into the annular groove (3').

2. Valve component according to claim 1, **characterised in that** the seal bushing (8) is pressed into one of the housing parts (3, 4).

3. Valve component according to claim 2, **characterised in that** a filter insert (9) follows in axial direction to the seal bushing (8) and is pressed together with the seal bushing (8) into one of the housing parts (4).

4. Valve component according to claim 3, **characterised in that** the filter insert (9) has a conical outer shape.

5. Valve component according to one of claims 1 to 4, **characterised in that** the seal bushing (8) consists of polyether-etherketone (PEEK).

## Revendications

1. Composant de vanne revêtant la forme d'un clapet antiretour ou d'un embout de raccordement notamment dévolu au remplissage de réservoirs de véhicules fonctionnant au gaz naturel, en vue du raccordement à un conduit de fluide ou à un accouplement emboîtable, avec étanchéité à la pression, sachant que ledit composant (1) de vanne comporte deux parties de carter (3, 4) qui sont reliées l'une à l'autre avec étanchéité à la pression, et reçoivent une soupape (7), et sachant qu'une douille d'étanchement (8), intérieurement disposée dans la zone de rencontre entre lesdites parties de carter (3, 4), forme simultanément la surface d'étanchement affectée à ladite soupape (7),
**caractérisé par le fait que**
les parties de carter (3, 4) sont solidarisées par compression au niveau d'une gorge annulaire (3') pratiquée dans l'une des deux parties de carter (3, 4), un bourrelet saillant (5') étant prévu à l'état non comprimé, sur l'autre des deux parties de carter (3, 4), en vue de l'insertion par compression (5) dans ladite gorge annulaire (3').

2. Composant de vanne, selon la revendication 1, **caractérisé par le fait que** la douille d'étanchement (8) est emmanchée à force dans l'une des parties de carter (3, 4).

3. Composant de vanne, selon la revendication 2, **caractérisé par le fait qu'**une pièce intégrée de filtration (9), se rattachant à la douille d'étanchement (8) dans le sens axial, est emmanchée à force dans l'une (4) des moitiés de carter conjointement à ladite douille d'étanchement (8).

4. Composant de vanne, selon la revendication 3, **caractérisé par le fait que** la pièce intégrée de filtration (9) présente une forme extérieure conique.

5. Composant de vanne, selon l'une des revendications 1 à 4, **caractérisé par le fait que** la douille d'étanchement (8) consiste en du polyétheréthercétone (PEEK).
